# EUROPEAN PATENT APPLICATION

(11) **EP 2 819 227 A1**
(43) Date of publication of application: **31.12.2014**
(21) Application number: 13751167.1
(22) Date of filing: 13.02.2013
(51) Int. Cl.: H01M 4/86, B01J 23/42, H01M 4/88, H01M 8/02, H01M 8/10

(54) **MEMBRANE-ELECTRODE JUNCTION FOR POLYMER ELECTROLYTE FUEL CELL, MANUFACTURING METHOD THEREFOR, AND POLYMER ELECTROLYTE FUEL CELL**

(30) Priority: 23.02.2012 JP 2012037654
(71) Applicant: Toppan Printing Co., Ltd., Tokyo 110-8560 (JP)
(72) Inventor: OZAWA, Madoka, Tokyo 110-8560 (JP)
(74) Representative: TBK
(86) International application number: PCT/JP2013/000783
(87) International publication number: WO 2013/125182

(57) **Abstract**

Provided are a membrane electrode assembly for a polymer electrolyte fuel cell having high power-generating characteristics in a high-temperature, low-humidity environment, and a polymer electrolyte fuel cell using the same. In this membrane electrode assembly for a polymer electrolyte fuel cell provided with electrode catalyst layers (2, 3), which include at least a proton-exchange polymer and carbon-supported catalyst, on both surfaces of a polymer electrolyte membrane (4), the resistance (Ri) of the proton-exchange polymer of the electrode catalyst layers (2, 3) is at least 2 Ωcm² but not more than 5 Ωcm² under measurement conditions of 20% relative humidity and an AC impedance of 10 kHz to 100 Hz.

## Description

### [Technical Field]

The present invention relates to a membrane electrode assembly for a polymer electrolyte fuel cell, a method for producing the same and a polymer electrolyte fuel cell.

### [Background Art]

A fuel cell is a power-generating system generating electricity by causing the reverse reaction of electrolysis of water to occur using hydrogen and oxygen as fuels. This has features such as of high efficiency, low environmental load and low noise over conventional power generation systems, and has received attention as a future clean energy source. Especially, polymer electrolyte fuel cells usable in the vicinity of room temperature has been expected for use in an in-vehicle power source or a stationary power source for domestic use, and various researches and developments regarding the polymer electrolyte fuel cell have been carried out in recent years. Problems toward practical use are how to improve cell performances such as power-generating characteristics and durability and to provide infrastructure equipment and reduce production cost.

Generally, polymer electrolyte fuel cells are formed by stacking many single cells. The single cell has a structure wherein a membrane electrode assembly is sandwiched by separators having gas flow passages. The membrane electrode assembly is such that a polymer electrolyte membrane is sandwiched by two electrodes of an oxidation electrode and a reduction electrode and bonded thereto.

With the polymer electrolyte fuel cell, the membrane electrode assembly has to be humidified so as to ensure protonic conductivity or electrical conductivity of a proton-exchange polymer in the polymer electrolyte membrane or electrode catalyst layer. A humidifier, however, is necessary for the humidification, thus leading to the cost increase as a whole of a fuel cell system. Therefore, low-humidity operations are preferred, and non-humidification operations are more preferred.

As a method of obtaining good cell characteristics even under low-humidity conditions, for example, there is a method of improving electrical conductivity by changing a structure of a proton-exchange polymer in an electrode catalyst layer, as described in PTL1. According to PTL1, an improvement in electric conductivity of proton-exchange polymer in the electrode catalyst layer allows a cell voltage to increase.

As another method of obtaining good cell characteristics even under low-humidity conditions, for example, there is a method wherein a ratio x (x = mass of polymer electrolyte / mass of conductive support) of a polymer electrolyte to a conductive support is set at 0.8≤x≤1.0, as described in PTL2. According to PTL2, it becomes possible to improve initial characteristics and durability of a fuel cell by optimizing components of the electrode catalyst layer and a formulation ratio thereof.

### [Citation List]

### [Patent Literature]

[PTL1] International Publication No.2008/050692
[PTL2] Japanese Patent Application Publication No. 2003-115299

### [Summary of Invention]

### [Technical Problem]

In the method according to PTL1, however, the proton-exchange polymer in the electrode catalyst layer and the proton-exchange polymer in the polymer electrolyte membrane are different in structure. This might cause an increase in interface resistance between the electrode catalyst layer and the polymer electrolyte membrane. Also, distortion or damage might occur in the membrane electrode assembly because of a difference in dimensional change between the electrode catalyst layer and the polymer electrolyte membrane as humidity changes.

In the method according to PTL2, although the components and formulation ratio thereof are optimized, the inner structure of the catalyst layer is not fully controlled, with the possibility that cell characteristics lower depending on the fabrication method.

The invention has been made so as to solve the above problem and has as its object the provision of a membrane electrode assembly for a polymer electrolyte fuel cell having good power-generating characteristics under a high-temperature and low-humidity environment, a method for producing the same, and a polymer electrolyte fuel cell.

### [Solution to Problem]

For solving the above problem, the invention according to claim 1 is directed to a membrane electrode assembly for a polymer electrolyte fuel cell characterized in that an electrode catalyst layer containing at least a proton-exchange polymer and carbon-supported catalyst is bonded to both surfaces of a polymer electrolyte membrane in the membrane electrode assembly for a polymer electrolyte fuel cell, resistance value Ri of the proton-exchange polymer of the electrode catalyst layer is within a range from not smaller than 2 Ωcm² to not larger than 5Ωcm² under measurement conditions of a relative humidity of 20% and an alternating-current impedance of 10 kHz-100 kHz.

The invention according to claim 2 is characterized in that a thickness of the electrode catalyst layer is within a range from not smaller than 1 µm to not larger than 15 µm.

The invention according to claim 3 is characterized in that a ratio of the proton-exchange polymer to the carbon-supported catalyst is from not smaller than 0.8 to not larger than 1.1.

The invention according to claim 4 is a method for producing the membrane electrode assembly for a polymer electrolyte fuel cell defined in any one of claims 1 to 3, characterized by including: the pre-dispersion step of mixing carbon- supported catalyst and a solvent to disperse the carbon- supported catalyst in the solvent; and the main dispersion step of adding at least a proton-exchange polymer to the carbon- supported catalyst dispersion obtained in the pre-dispersion step under mixing to disperse the carbon- supported catalyst and the proton-exchange polymer in the solvent.

The invention according to claim 5 is characterized by comprising the coating step of coating a substrate surface with a catalyst ink obtained in the main dispersion step, the pre-drying step of removing a part of the solvent component from the coating film of the catalyst ink coating the substrate surface to change the coating film to a half-dry catalyst layer, and the drying step of removing the solvent component from the half-dry catalyst layer to dry the film.

The invention according to claim 6 is characterized by comprising the membrane electrode assembly for a polymer electrolyte fuel cell defined in any one of claims 1 to 3.

### [Advantageous Effects of Invention]

The invention of claim 1 enables one to obtain a membrane electrode assembly for a polymer electrolyte fuel cell having high power-generating characteristics even under a high-temperature and low-humidity environment.

According to the invention of claim 2, it becomes possible to provide a membrane electrode assembly for a polymer electrolyte fuel cell having no problem such as cracking on the catalyst layer surface while keeping high power-generating characteristics.

According to the invention of claim 3, it becomes possible to obtain a membrane electrode assembly for a polymer electrolyte fuel cell having high protonic conductivity while keeping diffusivity of gas or water.

According to the invention of claim 4, catalyst availability is improved by improving the dispersability of the carbon-supported catalyst, thus, enabling one to obtain a membrane electrode assembly for a polymer electrolyte fuel cell having high power-generating characteristics.

According to the invention of claim 5, it becomes possible to obtain a membrane electrode assembly for a polymer electrolyte fuel cell having high protonic conductivity while suppressing the polymer electrolyte membrane from swelling due to the solvent component contained in the catalyst ink.

The invention of claim 6 enables one to obtain a polymer electrolyte fuel cell having high power-generating characteristics even under a high-temperature and low-humidity environment.

### [Brief Description of Drawings]

[Figure 1] is a cross-sectional view of a membrane electrode assembly for a polymer electrolyte fuel cell according to a first embodiment of the present invention.
[Figure 2] is an explanatory diagram showing a pre-dispersion step and a main dispersion step in a method for producing a membrane electrode assembly for a polymer electrolyte fuel cell according to the present invention.
[Figure 3] is an explanatory diagram showing a coating step, a half-drying step and a drying step in a method for producing a membrane electrode assembly for a polymer electrolyte fuel cell according to the present invention.
[Figure 4] is an explanatory diagram showing the state of an electrode catalyst layer when a membrane electrode assembly for a polymer electrolyte fuel cell is produced according to the present invention.
[Figure 5] is an explanatory diagram showing the state of an electrode catalyst layer when a membrane electrode assembly for a fuel cell is produced according to a method different from the present invention.

### [Description of Embodiments]

### (First embodiment)

A first embodiment (hereinafter referred to as this embodiment) of the present invention is now described, referring to the drawings. It will be noted that this embodiment is an example of the present invention, and does not limit the present invention.

The present invention provides a membrane electrode assembly for a polymer electrolyte fuel cell which a polymer electrolyte fuel cell possesses, and a method (producing method) for producing a membrane electrode assembly for a polymer electrolyte fuel cell which a polymer electrolyte fuel cell possesses.

Specifically, in the present invention, as a result of intensive studies regarding power-generating characteristics of the membrane electrode assembly under a high-temperature and low-humidity environment, it has been found that a resistance value Ri of a proton-exchange polymer in an electrode catalyst layer significantly affects a level of power-generating performance. Thus, in the present invention, making the resistance value Ri of the proton-exchange polymer in the electrode catalyst layer within a predetermined range allows obtaining a polymer electrolyte fuel cell having high power-generating characteristics even under a high-temperature and low-humidity environment.

Further, in the present invention, as a result of intensive studies regarding the resistance value Ri of the proton-exchange polymer under a high-temperature and low-humidity environment, it has been found that the manner of producing an electrode catalyst layer significantly affects a level of the resistance value Ri of the proton-exchange polymer. Thus, in the present invention, the resistance value Ri of the proton-exchange polymer in the electrode catalyst layer could be set within a predetermined range by mixing at least carbon-supported catalyst and a solvent and subjecting to dispersion treatment, after which at least a proton-exchange polymer and a solvent are mixed with the resulting carbon-supported catalyst dispersion and subsequently subjected to dispersion treatment. Further, the resistance value Ri of the proton-exchange polymer in the electrode catalyst layer could be set within a predetermined range by coating a catalyst ink containing at least a proton-exchange polymer, a carbon-supported catalyst and a solvent, removing a part of the solvent component from the coating film of the catalyst ink to form a half-dry catalyst layer, further removing the solvent component from the half-dry catalyst layer and drying..

### (Configuration)

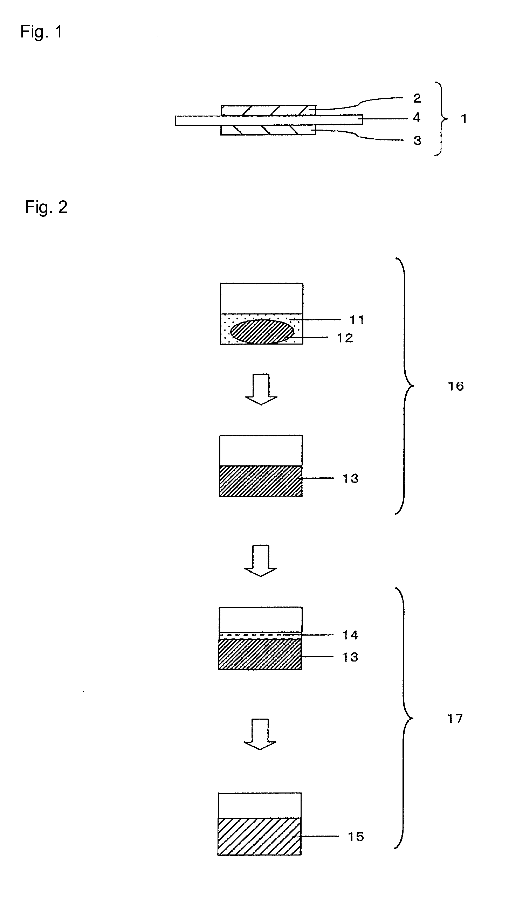

Fig. 1 is a view showing a membrane electrode assembly for a polymer electrolyte fuel cell according to this embodiment. The membrane electrode assembly 1 for a polymer electrolyte fuel cell (hereinafter referred to as a membrane electrode assembly for fuel cell) shown in Fig. 1 has a cathode catalyst layer 2 and an anode catalyst layer 3, and the electrode catalyst layers 2 and 3 are configured to contain at least a proton-exchange polymer and carbon-supported catalyst. The membrane electrode assembly 1 for fuel cell has a polymer electrolyte membrane 4, in which the cathode catalyst layer 2 is bonded to one of the surfaces of the polymer electrolyte membrane 4 and the anode catalyst layer 3 is bonded to the other surface of the polymer electrolyte membrane 4.

The proton-exchange polymer of the electrode catalyst layers 2 and 3 has its resistance value Ri within a range from not smaller than 2 Ωcm² to not larger than 5Ωcm², more preferably within a range from not smaller than 3 Ωcm² to not larger than 5Ωcm² under measurement conditions of a relative humidity of 20% and an alternating-current impedance of 10 kHz-100 kHz. If the resistance value is larger than the range, an output of the fuel cell lowers, and if the resistance value is less than the above range, shortage may occur.

The resistance value Ri of the proton-exchange polymer of the electrode catalyst layers 2 and 3 can be measured by alternating-current impedance measurement using an electrochemical evaluation device such as a frequency response analyzer and a potentio/galvanostat, for example, 12608W type (1260/1287) or 1280C type, manufactured by Solartron company.

It is preferred that the thickness of the cathode catalyst layer 2 is within a range from not smaller than 0.1 µm to not larger than 20 µm, more preferably within a range from not smaller than 3 µm to not larger than 15 µm, and further more preferably within a range from not smaller than 10 µm to not larger than 15 µm. If it is thicker than this range, cracks may occur on the catalyst layer surface, or gas or generated water may be blocked from diffusing, with some possibility that the output of the fuel cell lowers. Also, it would be difficult to make the resistance value Ri of the proton-exchange polymer of the catalyst layer within a desired range, specifically, within a range of 5 Ωcm² or less. On the other hand, if the thickness is smaller than this range, the in-plane catalyst or proton-exchange polymer might become non-uniform.

Preferably, the thickness of the anode catalyst layer 3 is within a range from not smaller than 0.1 µm to not larger than 20 µm, and more preferably within a range from not smaller than 0.5 µm to not larger than 5 µm. If it is thicker than the range, cracks may occur on the catalyst layer surface, or the supply of a fuel is impeded, with some possibility that the output of the fuel cell lowers. Also, it would be difficult to set the resistance value Ri of the proton-exchange polymer of the catalyst layer within a desired range, specifically, within a range of 5 Ωcm² or less. On the other hand, if the thickness is smaller than the above range, the in-plane catalyst or proton-exchange polymer might become non-uniform.

The thicknesses of the cathode catalyst layers 2 and the anode catalyst layer 3 can be confirmed, for example, as follows. Cross-sectional surfaces at five or more sites are observed with a scanning electron microscope (SEM) at about 3000 times magnification to 10000 times magnification, thicknesses at three or more points in each observation site are measured, and the average thereof is provided as a representative value of each observation site. The average of the representative values is determined as a catalyst layer thickness.

It is preferred that the ratio of the proton-exchange polymer to the carbon support in the electrode catalyst layer 2, 3 is within a range from not smaller than 0.8 to not larger than 1.1. If the ratio is larger than this range, the proton-exchange polymer blocks a gas or generated water from diffusing, so that the output of the fuel cell may lower. If the ratio is smaller than this range, the entangling contact of the proton-exchange polymer with the catalyst becomes insufficient, so that the output of the fuel cell may lower.

Various types of materials can be used as a proton-exchange polymer of the electrode catalyst layers 2,3 and the polymer electrolyte membrane 4. In view of the interface resistance between the electrode catalyst layers 2, 3 and the polymer electrolyte membrane 4 and the dimensional variation rate caused by changes in humidity of the electrode catalyst layers 2, 3 and the polymer electrolyte membrane 4, it is preferred that the proton-exchange polymer to be used has the same components for both the electrode catalyst layers 2, 3 and the polymer electrolyte membrane 4.

Further, the proton-exchange polymer used in the electrode catalyst layers 2, 3 and the polymer electrolyte membrane 4 may be ones that have protonic conductivity, and fuluorocarbon-based polymer electrolytes and hydrocarbon-based polymer electrolytes can be used.

As the fuluorocarbon-based polymer electrolyte, there can be used, for example, Nafion (trade mark) produced by Du Pont, Flemion (trade mark) produced by Asahi Glass Co. LTD., Aciplex (trade mark) produced by Asahi Kasei Co. LTD., and Gore Select (trade mark) produced by Gore.

As a hydrocarbon-based polymer electrolyte, there can be used sulfonated polyether ketone, sulfonated polyether sulfone, sulfonated polyether ether sulfone, sulfonated polysulfide, sulfonated polyphenylene, and so on.

Especially, Nafion (trade mark) materials, produced by Du Pont, can be preferably used as the polymer electrolyte membrane 4.

As a catalyst of the electrode catalyst layers 2 and 3, there can be used, aside from platinum group elements such as platinum, palladium ruthenium, iridium, rhodium and osmium, metals such as iron, lead, copper, chrome, cobalt, nickel, manganese, vanadium, molybdenum, gallium and aluminum, and alloys, oxides, multiple oxides and carbides thereof.

Although carbon carrying these catalysts may be any ones so far as they are in the form of fine powder and are electrically conductive and which are not attacked by the catalyst, for example, carbon black, graphite, black lead, activated charcoal, carbon nanotube and fullerene can be used preferably. Supports other than carbon may also be used as long as they have conductivity and are not attacked by the catalyst.

(Method for producing a membrane electrode assembly for a polymer electrolyte fuel cell)

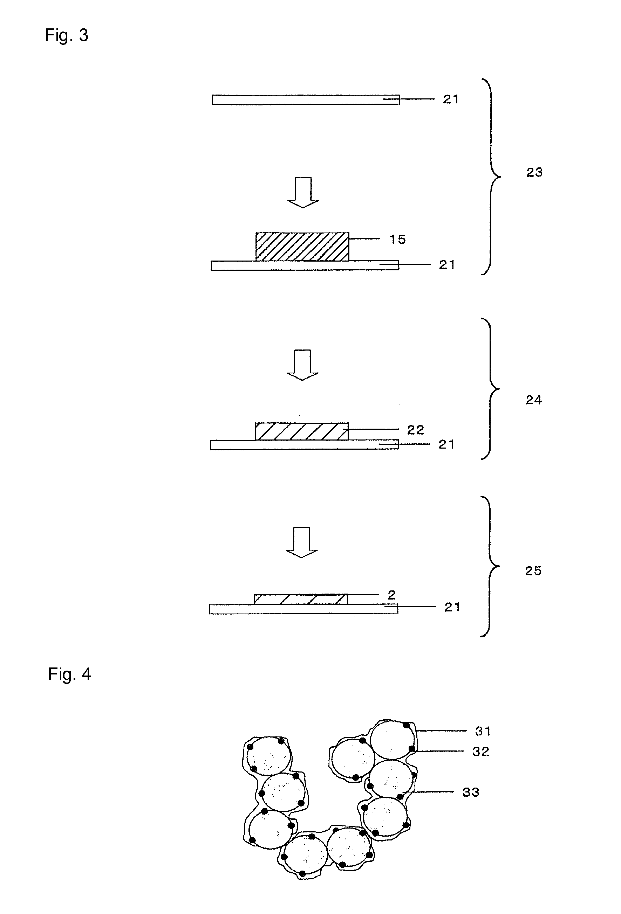

A method for producing the membrane electrode assembly 1 for a fuel cell shown in Fig. 1 is now described with reference to Figs. 2 and 3.

At first, as shown in Fig. 2, at least carbon-supported catalyst 12 and a solvent 11 are mixed to obtain a carbon-supported catalyst dispersion 13 where the carbon-supported catalyst 12 is dispersed in the solvent 11 (pre-dispersion step 16).

Next, a proton-exchange polymer dispersion 14 wherein at least a proton-exchange polymer is dispersed in a solvent is added to the carbon-supported catalyst dispersion 13 obtained in the pre-dispersion step 16, and the carbon-supported catalyst dispersion 13 and the proton-exchange polymer dispersion 14 are mixed such that the carbon-supported catalyst 12 and the proton-exchange polymer are dispersed in the solvent, thereby obtaining a catalyst ink 15 (main dispersion step 17).

In the pre-dispersion step 16 and the main dispersion step 17, for example, various techniques using a planetary ball mill, bead mill, and ultrasonic homogenizer, can be used.

The solvents used for obtaining the catalyst ink 15 may be ones which do not erode catalyst particles or proton-exchange polymers, and in which a proton-exchange polymer can be dissolved in highly fluid state or dispersed as a fine gel, and thus no specific limitation is placed thereon

The solvent may contain water as long as it is miscible with the proton-exchange polymer. The amount of water may be within a range which can avoid the proton-exchange polymer from being separated to cause white turbidity or gelation, and there is no other specific limitation.

Further, volatile liquid organic solvents can be used as a solvent. Since using lower molecular-weight alcohols has a high risk of ignition, such a solvent is preferably used as a mixed solvent with water.

After obtaining the catalyst ink 15 in the main dispersion step 17, as shown in Fig. 3, a surface of a sheet-shaped substrate 21 is coated with the catalyst ink 15, and the catalyst ink 15 coating the surface of the substrate 21 is half-dried until a half-dry catalyst layer 22 is formed where a part of the solvent component is removed from the coating film of the catalyst ink 15 (coating step 23 and pre-drying step 24). Thereafter, the half-dry catalyst layer 22 is dried to remove the solvent component from the half-dry catalyst layer 22 until the half-dry catalyst layer 22 becomes the electrode catalyst layer 2 (drying step 25).

As the substrate 21 coated with the catalyst ink 15, there can be used fluorine resins having excellent transfer properties, such as ethylene tetrafluoroethylene copolymer (ETFE), tetrafluoroethylene-hexafluoropropylene copolymer (FEP), tetrafluoro perfluoroalkylvinylether copolymer (PFA) and polytetrafluoroethylene (PTFE). Further, there can also be used polymer films, such as polyimide, polyethylene terephthalate, polyamide (Nylon), polysulfone, polyethersulfone, polyphenylene sulfide, polyether ether ketone, polyetherimide, polyacrylate and polyethylene naphthalate. Alternatively, it is possible to use the polymer electrolyte membrane as the substrate 21, and to coat it directly with the catalyst ink 15.

In the coating step 23, there can be used various coating methods, such as die coating, roll coating, curtain coating, spray coating and squeegee coating. Specifically, die coating can be preferably used, because the thickness at the coated intermediate portion is kept stable and intermittent coating can be performed.

In the pre-drying step 24 and the drying step 25, for example, a warm-air oven, IR drying and reduced-pressure drying can be used.

If the polymer electrolyte membrane 4 is used as the substrate 21 in the coating step 23, after forming the electrode catalyst layer 2 in the above step, the electrode catalyst layer 3 is also formed, in a similar way, on the surface of the polymer electrolyte membrane 4 on a side opposite to the surface on which the electrode catalyst layer 2 has been formed, thereby obtaining the membrane electrode assembly 1 for a fuel cell shown in Fig. 1.

If other than the polymer electrolyte membrane, for example, polymer film is used as the substrate in the coating step 23, the cathode catalyst layer 2 and the anode catalyst layer 3 are formed separately, the polymer electrolyte membrane 4 is sandwiched by the substrate surfaces facing each other, followed by heating and pressing the aligned laminated body, thereby the cathode catalyst layer 2 and the anode catalyst layer 3 are bonded on both surfaces of the polymer electrolyte membrane 4. After that, the sheet-shaped substrates 21 are removed from the surfaces of the cathode catalyst layer 2 and the anode catalyst layer 3, thereby obtaining the membrane electrode assembly 1 for a fuel cell shown in Fig. 1.

The pressure exerted on the electrode catalyst layers 2 and 3 in the bonding step affects the battery performance of the polymer electrolyte fuel cell. Therefore, in order to obtain the polymer electrolyte fuel cell having a good battery performance, it is preferred that the pressure exerted on the electrode catalyst layers 2 and 3 is from not less than 0.5 MPa to not larger than 20 MPa, more preferably from not less than 2 MPa to not larger than 15 MPa. A higher pressure acts to excessively compress the electrode catalyst layers 2 and 3, and a lower pressure leads to poor adhesion between the electrode catalyst layers 2,3 and the polymer electrolyte membrane 4, thereby lowering the battery performance.

It is preferred that the bonding temperature is set in the vicinity of a glass transition point of the proton-exchange polymer of the electrode catalyst layer 2, 3, because it is effective for improving bonding between the electrode catalyst layers 2,3 and the polymer electrolyte membrane 4 and for decreasing the interface resistance.

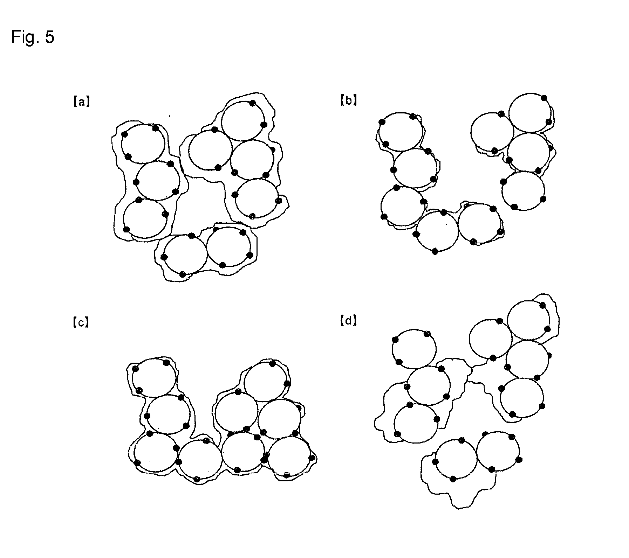

Fig. 4 shows a state of the electrode catalyst layer when the membrane electrode assembly for a fuel cell is produced by the above method, and Fig. 5 shows a state of the electrode catalyst layer when a membrane electrode assembly for a fuel cell is produced using a catalyst ink obtained without the pre-dispersion step.

Oxidation-reduction reaction of a fuel cell can occur only on the surface (three-phase interface) of the catalyst 32, where the catalyst 32 (see Fig. 4) of the electrode catalyst layer contacts both the carbon support 33 serving as an electron conductor and the proton-exchange polymer 31, and where introduced gas can be absorbed. Accordingly, if the ratio of the proton-exchange polymer 31 to the carbon supports 33 is within the range from not smaller than 0.8 to not larger than 1.1, as shown in Fig. 4, the supports 33 and proton-exchange polymer 31 of the electrode catalyst layers 2, 3 have a structure where the area of the three-phase interfaces is large, and the supply path of protons or fuel gas to the three-phase interfaces is improved, and thus the battery performance can be improved.

On the other hand, if the ratio of the proton-exchange polymer 31 to the carbon supports 33 is larger than 1.1, as shown in Fig. 5(a), the proton-exchange polymer 31 blocks a gas or generated water from diffusing, which might decrease the output of the fuel cell. Further, if the ratio of the proton-exchange polymer 31 to the carbon supports 33 is smaller than 0.8, as shown in Fig. 5(b), the entangling contact of the proton-exchange polymer 31 with the catalyst 32 becomes insufficient, which might decrease the output of the fuel cell.

If the electrode catalyst layers 2 and 3 are formed using a catalyst ink prepared without the pre-dispersion step 16, as shown in Fig. 5(c), aggregation of the carbon-supported catalyst occurs, which increases the amount of catalyst 32 existing in areas other than the three-phase interfaces. Because of not contribution to the oxidation-reduction reaction of the electrodes, the output of the fuel cell might decrease.

Further, as shown in Fig. 5(d), aggregation of the proton-exchange polymer 31 occurs, so that the catalyst 32 existing in areas other than the three-phase interfaces increases in amount and do not contribute to the oxidation-reduction reaction of the electrodes, with the possibility that the output of the fuel cell decreases.

### Example 1

Hereinafter, Examples of the present invention and Comparative examples are described.

### (Example 1)

A carbon-supported platinum catalyst (Trade name: TEC10E50E, produced by Tanaka Kikinzoku Kogyo) and a mixed solvent of water and ethanol were mixed, followed by being subject to a dispersion treatment with a planetary ball mill, thereby preparing a carbon-supported catalyst dispersion. Next, a proton-exchange polymer (Nafion, trademark of Du Pont) was mixed into the carbon-supported catalyst dispersion such that the ratio of the proton-exchange polymer to the carbon support was 1, followed by being subject to a dispersion treatment with a planetary ball mill, thereby preparing a catalyst ink. Thereafter, a surface of PTFE film was coated with the prepared catalyst ink in the form of a rectangle using a slit die coater, and the PTFE film coated with the catalyst ink was subsequently placed in a warm-air oven at 70°C and dried until tackiness of the catalyst ink was lost. Further, the PTFE film on which a half-dry catalyst layer was formed was placed in the warm-air oven at 100°C to dry the catalyst layer, thereby forming the cathode catalyst layer on the PTFE surface. Also, in a similar way, an anode catalyst layer was formed on a PTFE surface.

Thereafter, the anode catalyst layer and the cathode catalyst layer formed on the PTFE films were, respectively, disposed to face both surfaces of a polymer electrolyte membrane (Nafion 212: registered trade mark, produced by Du Pont), and the resulting laminate was hot-pressed, followed by removing the PTFE films, thereby obtaining a membrane electrode assembly of Example 1.

### (Example 2)

A membrane electrode assembly of Example 2 was obtained in the same manner as Example 1 except that an ultrasonic homogenizer was used in place of the planetary ball mill in the pre-dispersion step.

### (Example 3)

A membrane electrode assembly of Example 3 was obtained in the same manner as Example 1 except that an IR drying furnace in place of the warm-air oven was used in the pre-drying step.

### (Example 4)

A membrane electrode assembly of Example 4 was obtained in the same manner as Example 1 except that the catalyst ink was prepared such that the ratio of the proton-exchange polymer to the carbon support was 0.8.

### (Example 5)

A membrane electrode assembly of Example 5 was obtained in the same manner as Example 1 except that the catalyst ink was prepared such that the ratio of the proton-exchange polymer to the carbon support was 1.1.

### (Comparative example 1)

A membrane electrode assembly of Comparative example 1 was obtained in the same manner as Example 1 except that the catalyst ink was prepared such that the ratio of the proton-exchange polymer to the carbon support was 0.7.

### (Comparative example 2)

A membrane electrode assembly of Comparative example 2 was obtained in the same manner as Example 1 except that the catalyst ink was prepared such that the ratio of the proton-exchange polymer to the carbon support was 1.2.

### (Comparative example 3)

A membrane electrode assembly of Comparative example 3 was obtained in the same manner as Example 1 except that carbon-supported platinum catalyst (Trade name: TEC10E50E, produced by Tanaka Kikinzoku Kogyo), a mixed solvent of water and ethanol, and a proton-exchange polymer (Nafion, registered trade mark of Du Pont) dispersion were mixed, followed by being subject to a dispersion treatment with a planetary ball mill, thereby preparing a catalyst ink.

### (Comparative example 4)

A membrane electrode assembly of Comparative example 4 was obtained in the same manner as Example 1 except that a PTFE film coated with a catalyst ink was put in a warm-wind oven at 100°C to dry a catalyst layer.

### (Evaluation)

Hereinafter, comparison results of the resistance value Ri of battery performance under a high-temperature and low-humidity environment are described, using Examples 1-5 and Comparative examples 1-4. It will be noted that a cell where gas diffusion layers, gaskets and separators were disposed on both surfaces of a membrane electrode assembly and tightened to reach a predetermined surface pressure was used as a single cell for evaluation.

### (Measuring the resistance value Ri of proton-exchange polymer in the electrode catalyst layer)

The resistance values Ri of the proton-exchange polymers in an electrode catalyst layers were measured on the basis of the method described in R.Makhariaetal, Journal of The Electrochemical,152(5) A970-A977(2005).

Specifically, the single cell for evaluation was placed at 80°C, hydrogen gas of 20% RH was supplied to the anode side, and nitrogen gas of 20% RH was supplied to the cathode side. In the measurement of alternating-current impedance, a frequency response analyzer manufactured by Solatino company and a 1287 type potentio/galvanostat manufactured by Solatino company were connected and used. Nyquist plots of alternating-current were obtained when frequency was gradually changed from 10 kHz to 100 Hz, while setting applied voltage at 500 mV and potential amplitude at 10 mV.

In the Nyquist plots, when coordinate of intersections of a high-frequency range (45°range) approximated by straight-line with the real axis is (Z1, Z'1) and coordinate of intersections of the approximated straight line of the high-frequency range with the approximated straight line of the low-frequency range is (Z2, Z'2), Z2-Z1 corresponds to Ri/3. Therefore, Ri was calculated by trebling the value of Ri/3, which was obtained by the above measurement of alternating-current. This Ri is the resistance value of the proton-exchange polymer contained in the cathode catalyst layer and the anode catalyst layer, and can be distinguished from the resistance value of the proton-exchange polymer contained in the polymer electrolyte membrane.

### (Measuring power-generating performance)

The single cell for evaluation was placed at 80°C, hydrogen gas of 25% RH was supplied to the anode side, and air of 25% SolationH was supplied to the cathode side. The power-generating performance was measured by measuring the cell voltage, after setting hydrogen utilization at 60 % and air utilization at 50 % and keeping generating power for five minutes.

### (Comparison results)

Table 1 shows the results of measuring the resistance value Ri under a high-temperature and low-humidity environment and the cell voltage when the membrane electrolyte assemblies for polymer electrolyte fuel cell of Examples 1-5 and Comparative examples 1-4 were used.

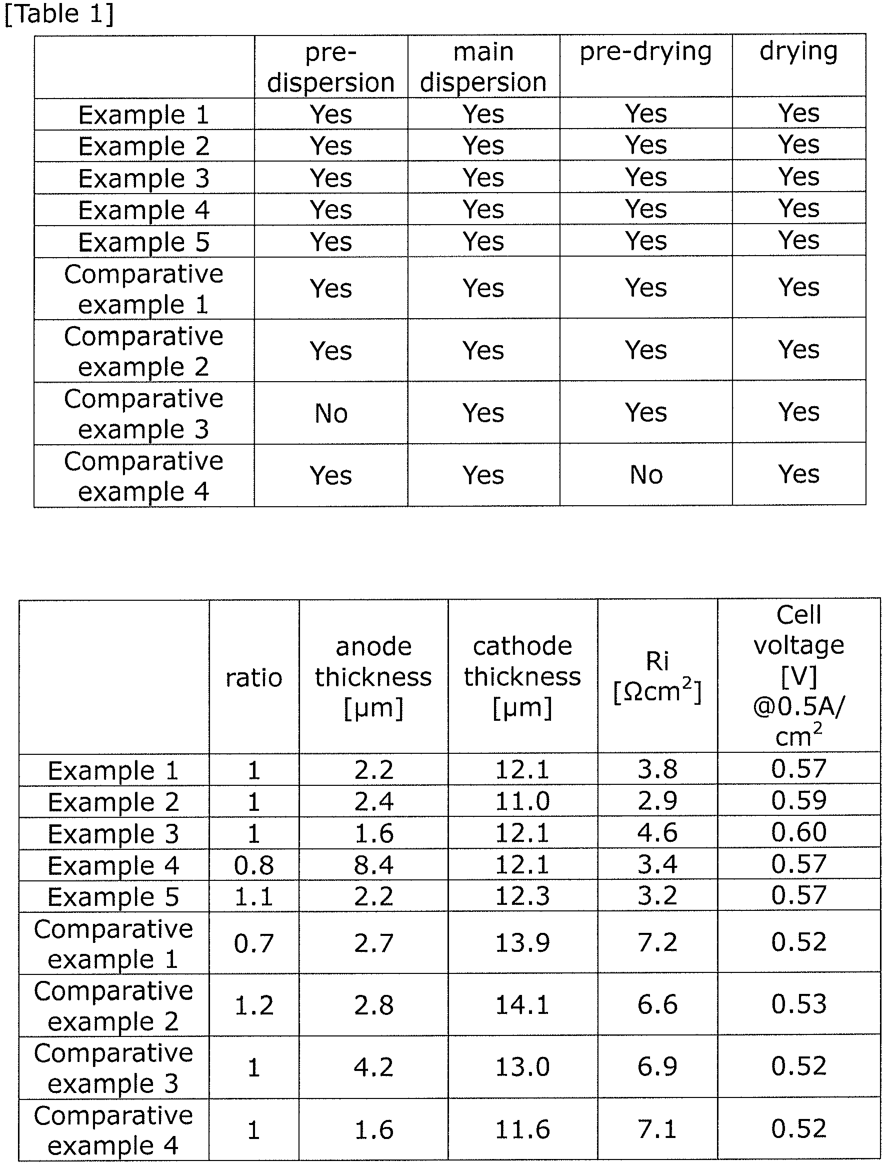

In Examples 1-5, the resistance values Ri of the proton-exchange polymer in the electrode catalyst layer were within the predetermined range, the membrane electrolyte assemblies for polymer electrolyte fuel cell having an excellent power-generating performance was able to be obtained. On the other hand, in Comparative examples 1-4, the resistance values Ri of the proton-exchange polymer in the electrode catalyst layer were over the predetermined range, power-generating performance lowered.

### [Industrial Applicability]

According to a producing method of the present invention, it is possible to obtain a membrane electrode assembly for a polymer electrolyte fuel cell having high power-generating characteristics even under a high-temperature and low-humidity environment, and a polymer electrolyte fuel cell using the same. Accordingly, the present invention has a great industrial utility value, because the fuel cell using polymer electrolyte membrane has performance for favorable use, particularly, in a stationary cogeneration system, a fuel-cell vehicle, and so on, and can reduce cost.

### [Reference Signs List]

- 1: membrane electrode assembly
- 2: cathode catalyst layer (electrode catalyst layer)
- 3: anode catalyst layer (electrode catalyst layer)
- 4: polymer electrolyte membrane
- 11: solvent
- 12: carbon-supported catalyst
- 13: carbon-supported catalyst dispersion
- 14: proton-exchange polymer dispersion
- 15: catalyst ink
- 16: pre-dispersion step
- 17: main dispersion step
- 21: substrate
- 22: half-dry catalyst layer
- 23: drying step
- 24: pre-drying step
- 25: drying step
- 31: proton-exchange polymer
- 32: catalyst
- 33: carbon support

## Claims

1. A membrane electrode assembly for a polymer electrolyte fuel cell, **characterized in that**
an electrode catalyst layer containing at least a proton-exchange polymer and carbon-supported catalyst is bonded to both surfaces of a polymer electrolyte membrane in the membrane electrode assembly for a polymer electrolyte fuel cell,
resistance value Ri of the proton-exchange polymer of the electrode catalyst layer is within a range from not smaller than 2 Ωcm² to not larger than 5Ωcm² under measurement conditions of a relative humidity of 20% and an alternating-current impedance of 10 kHz-100 kHz.

2. The membrane electrode assembly for a polymer electrolyte fuel cell defined in claim 1, **characterized in that** a thickness of the electrode catalyst layer is within a range from not smaller than 0.1 µm to not larger than 20 µm.

3. The membrane electrode assembly for a polymer electrolyte fuel cell defined in claim 1 or 2, **characterized in that** a ratio of the proton-exchange polymer to the carbon-supported catalyst is from not smaller than 0.8 to not larger than 1.1.

4. A method for producing the membrane electrode assembly for a polymer electrolyte fuel cell defined in any one of claims 1 to 3, **characterized by** comprising:
the pre-dispersion step of mixing carbon- supported catalyst and a solvent to disperse the carbon- supported catalyst in the solvent ; and
the main dispersion step of adding at least a proton-exchange polymer to the carbon- supported catalyst dispersion obtained in the pre-dispersion step under mixing to disperse the carbon- supported catalyst and the proton-exchange polymer in the solvent.

5. The method for the membrane electrode assembly for a polymer electrolyte fuel cell defined in Claim 4, **characterized by** comprising the coating step of coating a substrate surface with a catalyst ink obtained in the main dispersion step, the pre-drying step of removing a part of the solvent component from the coating film of the catalyst ink coating the substrate surface to change the coating film to a half-dry catalyst layer, and the drying step of removing the solvent component from the half-dry catalyst layer to dry the film.

6. A polymer electrolyte fuel cell **characterized by** comprising the membrane electrode assembly for a polymer electrolyte fuel cell defined in any one of claims 1 to 3.
